(19) Europäisches Patentamt
European Patent Office
Office européen des brevets

(11) **EP 3 916 439 B1**

(12) **EUROPEAN PATENT SPECIFICATION**

(45) Date of publication and mention
of the grant of the patent:
**24.09.2025  Bulletin 2025/39**

(21) Application number: **20744804.4**

(22) Date of filing: **10.01.2020**

(51) International Patent Classification (IPC):
**G02B 5/20** *(2006.01)*          **G02B 5/28** *(2006.01)*
**G02B 5/08** *(2006.01)*

(52) Cooperative Patent Classification (CPC):
**G02B 5/206; G02B 26/008; G02B 5/0825;**
**G02B 7/008;** G02B 5/26; G02B 2207/113;
G03B 21/204

(86) International application number:
**PCT/JP2020/000569**

(87) International publication number:
**WO 2020/153144 (30.07.2020 Gazette 2020/31)**

(54) **COLOR CONVERSION ELEMENT**

FARBUMWANDLUNGSELEMENT

ÉLÉMENT DE CONVERSION DE COULEUR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(30) Priority: **25.01.2019   JP 2019010949**
**26.02.2019   JP 2019033358**

(43) Date of publication of application:
**01.12.2021   Bulletin 2021/48**

(73) Proprietor: **Panasonic Intellectual Property**
**Management Co., Ltd.**
**Osaka-shi, Osaka 540-6207 (JP)**

(72) Inventors:
• **HIRANO, Toru**
**Osaka-shi, Osaka 540-6207 (JP)**
• **MORIZUMI, Tsuyoshi**
**Osaka-shi, Osaka 540-6207 (JP)**
• **MIZOKAMI, Yosuke**
**Osaka-shi, Osaka 540-6207 (JP)**
• **SATO, Toshihiko**
**Osaka-shi, Osaka 540-6207 (JP)**

(74) Representative: **Müller-Boré & Partner**
**Patentanwälte PartG mbB**
**Friedenheimer Brücke 21**
**80639 München (DE)**

(56) References cited:
WO-A1-2018/179688      WO-A1-2018/179688
WO-A1-2018/230333      CN-A- 106 468 427
JP-A- 2006 003 562      JP-A- 2006 003 562
JP-A- 2015 038 978      JP-A- 2015 038 978
JP-A- 2015 121 586      JP-A- 2015 121 586
JP-A- 2018 077 324      JP-A- H04 121 701
US-A1- 2011 195 239      US-A1- 2016 091 712
US-A1- 2018 059 522      US-A1- 2018 231 880
US-A1- 2018 259 680

**Description**

[Technical Field]

The present invention relates to a color conversion element in which a fluorescent part is superposed on a substrate.

[Background Art]

For example, disclosed is a technology in which a fluorescent part and a substrate are joined with a heat conductive adhesive in order to improve heat dissipation in a phosphor foil (color conversion element) used in a projection device such as a projector (refer to, for example, Patent Literature (PTL) 1). Moreover, a reflective layer is superposed on a main surface of the substrate facing a fluorescent part, which consequently improves the conversion efficiency as a result of reflection of light from the fluorescent part at the reflective layer.

[Citation List]

[Patent Literature]

[PTL 1] Japanese Unexamined Patent Application Publication No. 2016-99566
Other prior art is known from CN 106 468 427 A.

[Summary of Invention]

[Technical Problem]

In recent years, there have been demands for further improving the conversion efficiency of color conversion performed in a color conversion element.
Thus, it is an object of the present invention to provide a color conversion element capable of improving the conversion efficiency.

[Solution to Problem]

A color conversion element according to one aspect of the present invention is defined by the features of claim 1.
Preferred features are defined in the dependent claims.

[Advantageous Effects of Invention]

With the color conversion element according to the present invention, it is possible to improve the conversion efficiency.

[Brief Description of Drawings]

[FIG. 1]

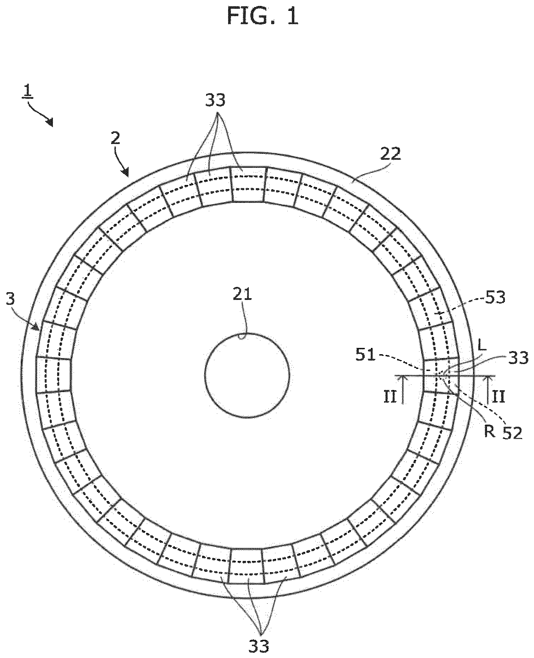

FIG. 1 is a schematic view illustrating a schematic configuration of a color conversion element according to an embodiment.
[FIG. 2]

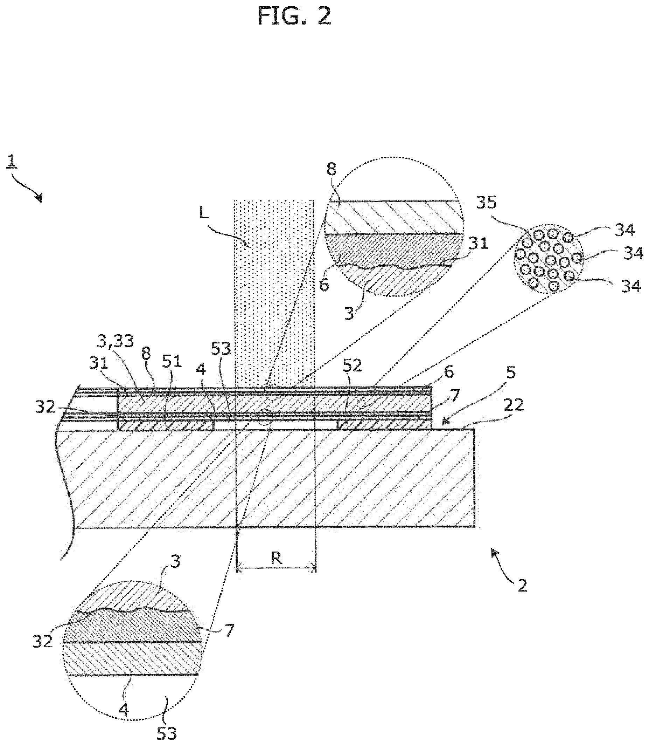

FIG. 2 is a sectional view from a cross section including line II-II in FIG. 1.
[FIG. 3]

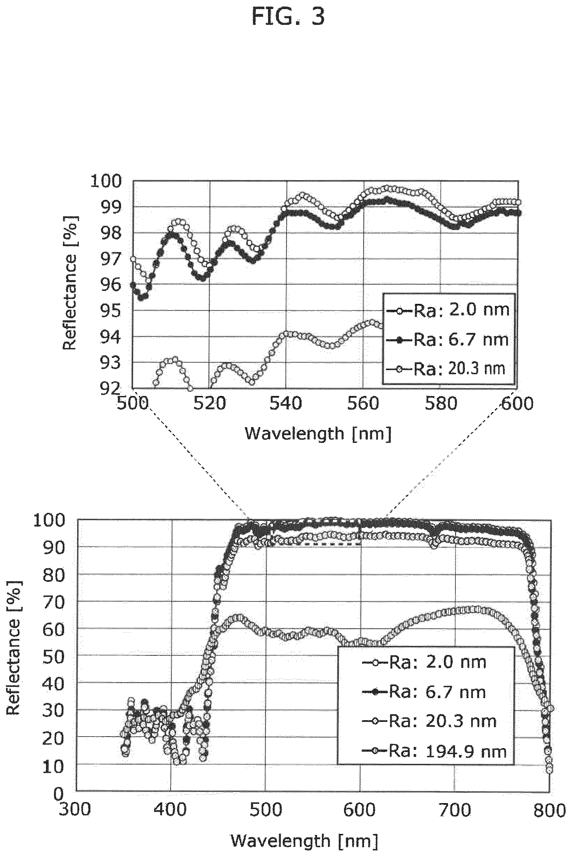

FIG. 3 is a graph illustrating relation between surface roughness Ra of a base material on which a reflective layer is superposed and the reflectance according to the embodiment.
[FIG. 4]

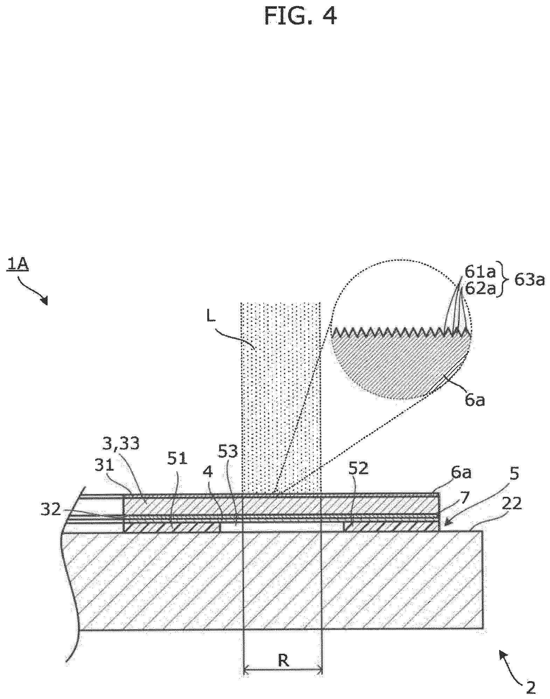

FIG. 4 is a sectional view illustrating a schematic configuration of a color conversion element according to Variation 1.
[FIG. 5]

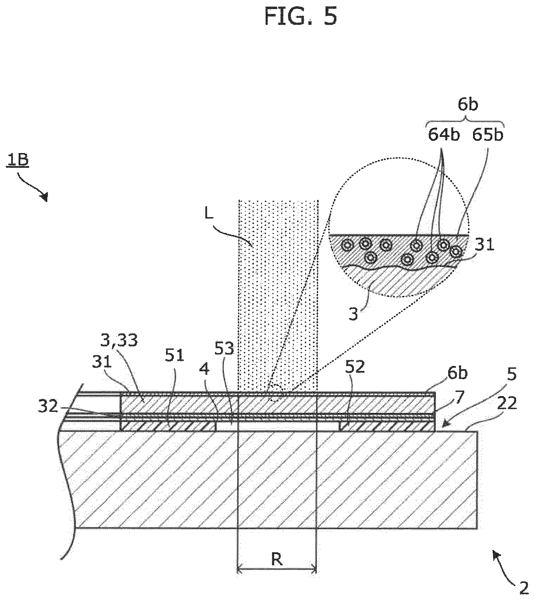

FIG. 5 is a sectional view illustrating a schematic configuration of a color conversion element according to Variation 2.
[FIG. 6]

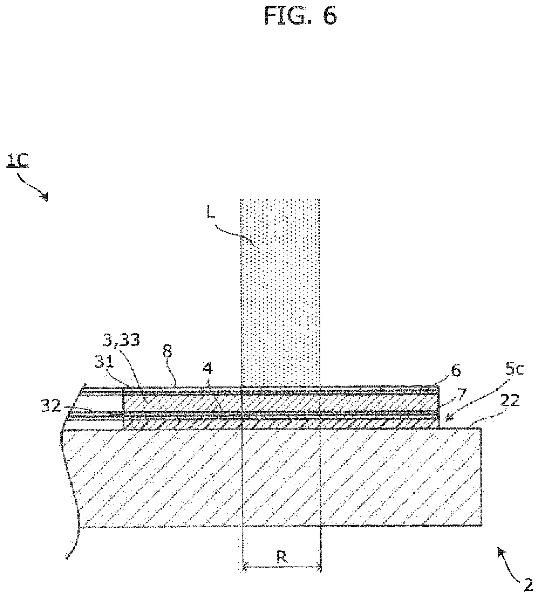

FIG. 6 is a sectional view illustrating a schematic configuration of a color conversion element according to Variation 3.
[FIG. 7]

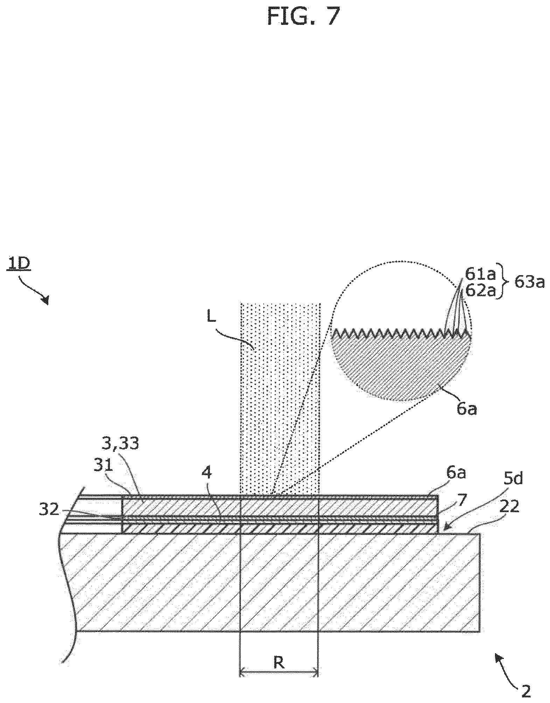

FIG. 7 is a sectional view illustrating a schematic configuration of a color conversion element according to Variation 4.
[FIG. 8]

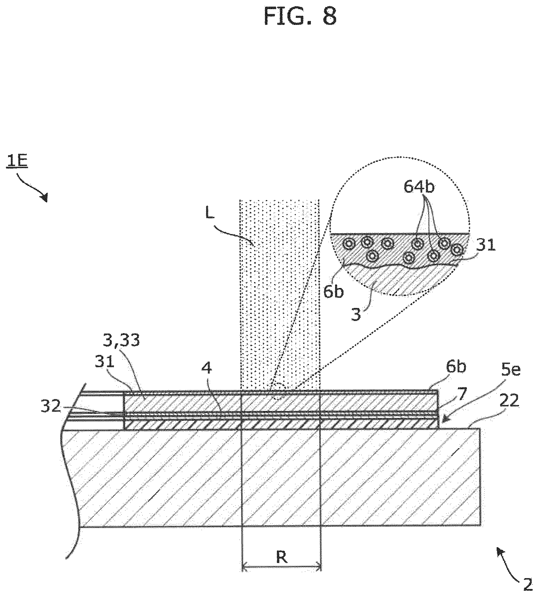

FIG. 8 is a sectional view illustrating a schematic configuration of a color conversion element according to Variation 5.
[FIG. 9]

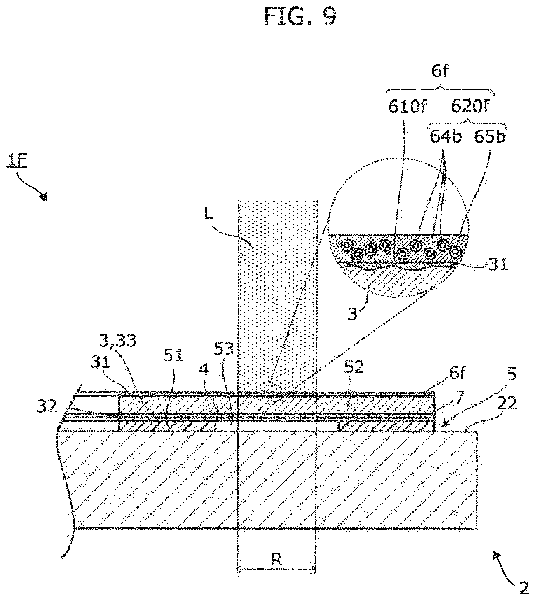

FIG. 9 is a sectional view illustrating a schematic configuration of a color conversion element according to Variation 6.
[FIG. 10]

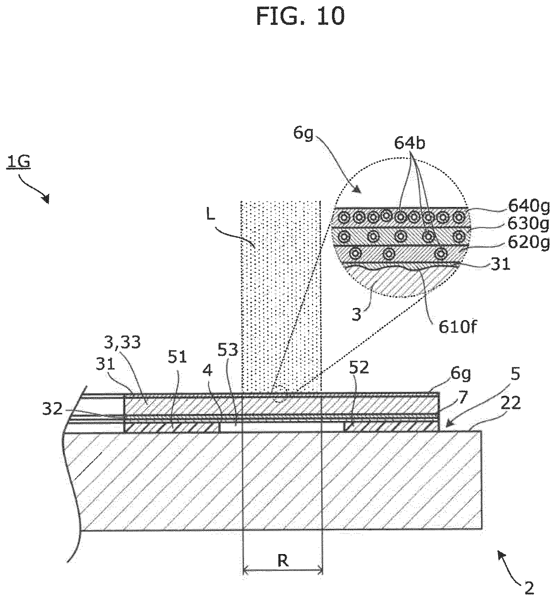

FIG. 10 is a sectional view illustrating a schematic configuration of a color conversion element according to Variation 7.
[FIG. 11]

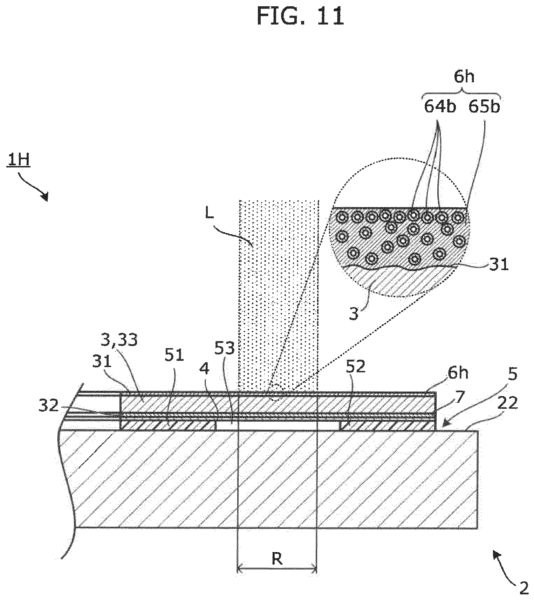

FIG. 11 is a sectional view illustrating a schematic configuration of a color conversion element according to Variation 8.
[FIG. 12]

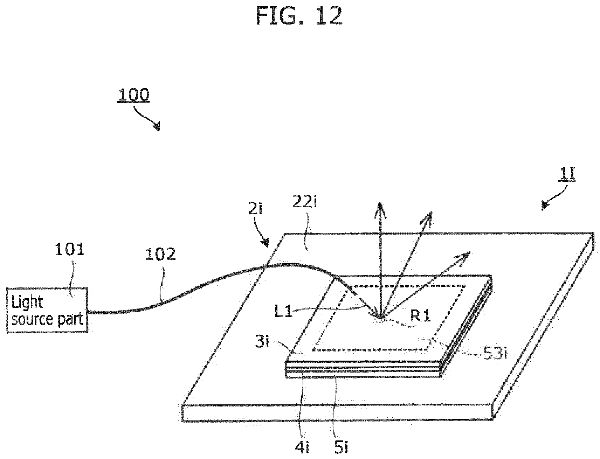

FIG. 12 is a schematic view illustrating a schematic configuration of an illumination device according to Variation 9.
[FIG. 13]

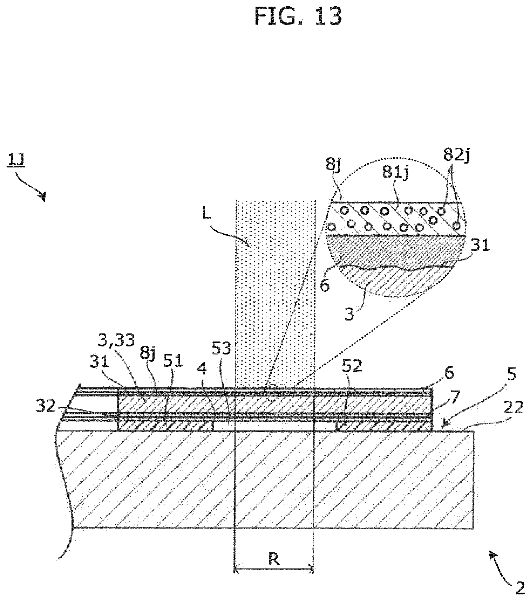

FIG. 13 is a sectional view illustrating a schematic configuration of a color conversion element according to Variation 10.
[FIG. 14]

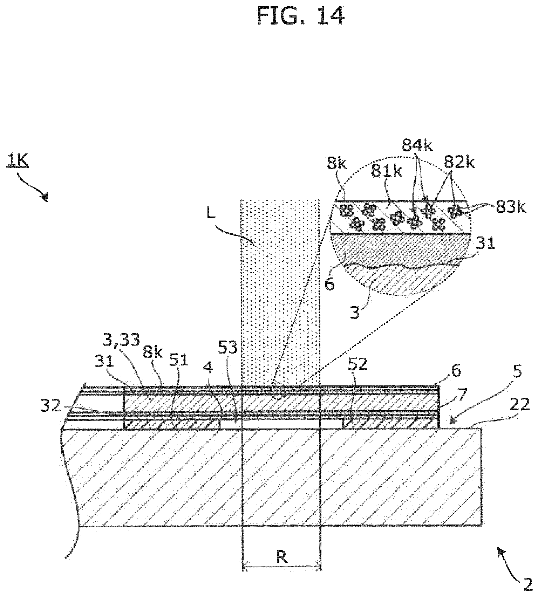

FIG. 14 is a sectional view illustrating a schematic configuration of a color conversion element according to Variation 11.
[FIG. 15]

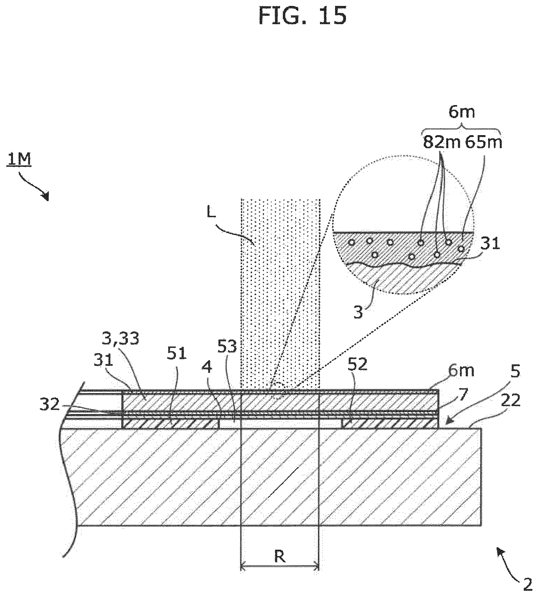

FIG. 15 is a sectional view illustrating a schematic configuration of a color conversion element according to Variation 12.

[Description of Embodiment]

Hereinafter, color conversion elements according to the embodiment will be described with reference to the drawings. Note that each embodiment described below illustrates a detailed preferable example of the present invention. Therefore, numerical values, shapes, materials, components, the arrangement and connection modes of the components, etc. illustrated in the embodiment below form one example and are not intended to limit the present invention in any manner. Therefore, of the components in the embodiment below, those not described in any independent claim indicating the highest concept of the present invention will be described as optional components.

Moreover, each of the drawings is a schematic view and does not necessarily provide a precise illustration. The same components will be provided with the same signs in the drawings.

Hereinafter, the embodiment will be described.

FIG. 1 is a schematic view illustrating a schematic configuration of a color conversion element according to the embodiment. FIG. 2 is a sectional view from a cross section including line II-II in FIG. 1.

Color conversion element 1 is a fluorescent wheel which is used for a projection device such as a projector. Provided as a light source part in the projection device is a semiconductor laser element which radiates, to color conversion element 1, laser light L with wavelengths of bluish purple to blue (430 to 490 nm). Color conversion element 1 radiates white light where the laser light L irradiated from the light source part is provided as excitation light. Hereinafter, color conversion element 1 will be described specifically.

As illustrated in FIGS. 1 and 2, color conversion element 1 includes substrate 2, fluorescent part 3, first flattening layer 6, second flattening layer 7, reflective layer 4, and joint part 5. Note that a main surface of each of the laminated bodies forming color conversion element 1 facing a light source is referred to as "surface" and a main surface of each laminated body opposing the light source is referred to as "rear surface". Moreover, the laser light L is illustrated by dot hatching in FIGS. 1 and 2. A region of color conversion element 1 to which the laser light L is irradiated is referred to as an irradiation region R. The irradiation region R is fixed but relatively moves in a circumferential direction on color conversion element 1 due to the rotation of color conversion element 1.

Substrate 2 is, for example, a circular substrate in a plan view and has a central part formed with through hole 21. A rotary shaft located in the projection device is attached to through hole 21 whereby substrate 2 is driven into rotation.

Substrate 2 is a substrate which has higher heat conductance than fluorescent part 3. Consequently, heat conducted from fluorescent part 3 can be efficiently released from substrate 2. More specifically, substrate 2 is formed of a metal material such as Al, $Al_2O_3$, AIN, Fe, or Ti. Note that substrate 2 may be formed of a material other than the metal material as long as the aforementioned material has higher heat conductance than fluorescent part 3. Materials other than the metal material include Si, ceramic, sapphire, and graphite. One surface 22 of substrate 2 has a flat shape and fluorescent part 3 is arranged to face surface 22 described above.

Fluorescent part 3 has uniform thickness as a whole. For example, fluorescent part 3 includes a plurality of granules (fluorescent granules 34), which are excited by the laser light L to emit fluorescence, in a dispersed manner and fluorescent granules 34 emit fluorescence through the irradiation of the laser light L. Thus, surface 31 of fluorescent part 3 serves as an emission surface. Surface 31 is a first main surface of fluorescent part 3 opposite to substrate 2. Moreover, rear surface 32 of fluorescent part 3 is a second main surface of fluorescent part 3 facing substrate 2. The normal direction of rear surface 32 of fluorescent part 3 substantially agrees with the direction of the incidence of the laser light L on fluorescent part 3 in the present embodiment. "Substantially agrees" is an expression which permits not only complete agreement but also a difference of approximately several percentages. Moreover, each of surface 31 and rear surface 32 of fluorescent part 3 has surface roughness Ra larger than 100 nm. More specifically, the surface roughness Ra of each of surface 31 and rear surface 32 of fluorescent part 3 is approximately 200 nm.

Fluorescent part 3 is formed into an annular shape as a whole in a plan view. Fluorescent part 3 is formed by annularly arraying a plurality of pieces 33 which have a sheet-like shape and a uniform thickness. The plurality of pieces 33 have the same shape and are of the same type. More specifically, pieces 33 are formed into a trapezoidal shape in a plan view. Note that pieces 33 may have any shape as long as the shape is sheet-like. Other shapes of pieces 33 in a plan view include a rectangular shape, a triangular shape, and other polygonal shapes.

Pieces 33 adjacent to each other are arranged with mutually adjacent sides substantially in agreement with each other. Pieces 33 include at least one type of fluorescent granules 34. In the present embodiment, pieces 33 radiate white light and include, in an appropriate ratio, three types of fluorescent granules 34, i.e., a red fluorescent body which emits red light, a yellow fluorescent body which emits yellow light, and a green fluorescent body which emits green light, all of which emission is achieved through the irradiation of the laser light L.

Types and characteristics of fluorescent granules 34 are not specifically limited, but laser light L with relatively high output turns into excitation light and thus the one which has high heat resistance is desirable.

Moreover, the type of base material 35 which holds fluorescent granules 34 in a dispersed state is not specifically limited, but base material 35 with high transparency for the wavelength of the excitation light and the wavelength of light emitted from fluorescent granules 34 is desirable. More specifically, examples of base material 35 include the one which is formed of, for example, glass or ceramic. Note that fluorescent part 3 may be a polycrystal or a single crystal provided by one type of fluorescent body.

First flattening layer 6 is superposed on entire surface 31 of each piece 33, and second flattening layer 7 is superposed on entire rear surface 32 of each piece 33.

First flattening layer 6 is flattened by directly covering surface 31 of fluorescent part 3 (piece 33) to fill in a small recess of surface 31. Thus, the surface roughness Ra of the surface of first flattening layer 6 is smaller than the surface roughness Ra of surface 31 of fluorescent part 3.

Second flattening layer 7 is flattened by directly covering rear surface 32 of fluorescent part 3 (piece 33) to fill in a small recess of rear surface 32. Thus, the surface roughness Ra of the rear surface of second flattening layer 7 is smaller than the surface roughness Ra of rear surface 32 of fluorescent part 3. More specifically, the rear surface of second flattening layer 7 is only required to have a surface roughness Ra of 20 nm or less. Moreover, second flattening layer 7 has a smaller refractive index than fluorescent part 3.

At least one of first flattening layer 6 and second flattening layer 7 has a visible light transmittance of 90% or more. In the present embodiment, first flattening layer 6 and second flattening layer 7 each have a visible light transmittance of 90% or more. More specifically, first flattening layer 6 is formed of a material which is light transmissive. Examples of the translucent material include transparent resin and $SiO_2$. Forming first flattening layer 6 with $SiO_2$ can improve the heat resistance. For example, a paste material containing siloxane can be applied to each of pieces 33 to bake the aforementioned material to thereby form first flattening layer 6 formed of $SiO_2$. The same material as the material of first flattening layer 6 is adopted for second flattening layer 7. Note that first flattening layer 6 and second flattening layer 7 may be formed of different materials.

Moreover, at least one of first flattening layer 6 and second flattening layer 7 has a thickness of 1.0 $\mu$m or more. In the present embodiment, the thickness of first flattening layer 6 and the thickness of second flattening layer 7 are equal to each other but may be different from each other.

Reflection suppressing layer 8 such as, for example, an AR coat layer is superposed on the entire surface of first flattening layer 6. Light extraction efficiency is improved by reflection suppressing layer 8. The surface of first flattening layer 6 has smaller surface roughness Ra than surface 31 of fluorescent part 3, and thus reflection suppressing layer 8 is also superposed on surface 31 of first flattening layer 6 with a uniform layer thickness, which makes it possible for reflection suppressing layer 8 to reliably exert the reflection suppression performance.

Reflective layer 4 which reflects light (the laser light L and light radiated from fluorescent granules 34) transmitted through second flattening layer 7 is superposed on the entire rear surface of second flattening layer 7 with a uniform thickness.

Reflective layer 4 is a dielectric multilayer film. The dielectric multilayer film is formed by alternately superposing a plurality of layers of a transparent dielectric material with a high refractive index (where n=2.0 to 3.0) and a transparent dielectric material with a low refractive index (where n=1.0 to 1.9). The dielectric multilayer film can realize desired reflection characteristics by adjusting the refractive indices of the materials and the thickness of the dielectric multilayer film. More specifically, the refractive indices of the materials and the thickness of the dielectric multilayer film forming reflective layer 4 are adjusted so as to provide high reflectance for the laser light L and the light radiated from fluorescent granules 34. Reflective layer 4 is superposed on the rear surface of second flattening layer 7 through, for example, spattering or thin film deposition. The rear surface of second flattening layer 7 has smaller surface roughness Ra than rear surface 32 of fluorescent part 3, and thus reflective layer 4 is also superposed on the rear surface of second flattening layer 7 with a uniform layer thickness, which therefore makes it possible for reflective layer 4 to more reliably exert reflection performance.

Joint part 5 lies between reflective layer 4 and substrate 2, joining together reflective layer 4 and substrate 2. More specifically, joint part 5 is formed of a resin-based adhesive formed of, for example, silicone resin. After joint part 5 is applied to surface 22 of substrate 2, reflective layer 4 of each piece 33 is attached to joint part 5 whereby each piece 33 forms fluorescent part 3 of an annular shape in a plan view on substrate 2. In the aforementioned state, reflective layer 4 of each piece 33 is formed into an annular shape in a plan view, as is the case with fluorescent part 3.

Joint part 5 includes first joint part 51 and second joint part 52. First joint part 51 and second joint part 52 have uniform thickness. First joint part 51 and second joint part 52 are formed into concentric annular shapes radially arranged at a predetermined interval in between. First joint part 51 has a smaller diameter than second joint part 52 and is arranged inside second joint part 52. First joint part 51 joins substrate 2 and an inner circumference part of reflective layer 4 located inward of the irradiation region R.

On the other hand, second joint part 52 has a larger diameter than first joint part 51 and is arranged outward of first joint part 51. Second joint part 52 joins together substrate 2 and an outer circumference part of reflective layer 4 located outward of the irradiation region R.

Air layer 53 of an annular shape concentric to first joint part 51 and second joint part 52 is formed between first joint part 51 and second joint part 52. The centers of first joint part 51, second joint part 52, and air layer 53 are the rotation center of color conversion element 1. Since first joint part 51 and second joint part 52 form an integrated body in which first joint part 51 and second joint part 52 are circumferentially continuous, air layer 53 is sealed between first joint part 51 and second joint part 52.

Air layer 53 exposes reflective layer 4 and substrate 2. That is, reflective layer 4 and substrate 2 are in contact with the air under the presence of air layer 53.

Air layer 53 is arranged at a position overlapping at least part of the irradiation region R in a plan view. In the present embodiment, air layer 53 is formed at such a position and in such a size that the entire irradiation region R is stored in a plan view. As described above, air layer 53 has an annular shape around the rotation center of color conversion element 1, and thus when color conversion element 1 rotates, air layer 53 constantly overlaps the irradiation region R in a plan view.

[Operation of Projection Device]

Next, the operation of the projection device will be described.

Upon the irradiation of the laser light L from the light source of the projection device, color conversion element 1 receives the laser light L at fluorescent part 3 through reflection suppressing layer 8 and first flattening layer 6 while being driving into rotation. At this point, the reflection of the laser light L is suppressed by reflection suppressing layer 8, which therefore enables most of the laser light L to reliably enter into fluorescent part 3.

Part of the laser light L directly hits fluorescent granules 34 in fluorescent part 3. Part of the laser light L which does not directly hit fluorescent granules 34 is reflected by reflective layer 4 through second flattening layer 7, hitting fluorescent granules 34. The laser light L which has arrived at fluorescent granules 34 is converted into white light by fluorescent granules 34 and then radiated. Part of the white light radiated from fluorescent granules 34 is directly released to an outside from fluorescent part 3 through first flattening layer 6 and reflection suppressing layer 8. Moreover, another part of the light radiated from fluorescent granules 34 is reflected by reflective layer 4 to be thereby released from fluorescent part 3 to the outside through first flattening layer 6 and reflection suppressing layer 8.

Here, there is a slight amount of light which is transmitted through reflective layer 4 formed of a dielectric multilayer film. To take measures against the aforementioned light, air layer 53 is provided at joint part 5. More specifically, air layer 53 is arranged immediately below reflective layer 4 in the irradiation region R as described above. In the aforementioned case, a critical angle $\theta c$ is expressed by Equation (1) below based on

Snell's law.

$$\theta c = \arcsin(n2/n1) \qquad (1)$$

Here, where refractive index n1 of fluorescent part 3 as an incidence source is 1.8 and refractive index n2 of air layer 53 as a travel destination is 1.0, critical angle $\theta c$ is 33.8 degrees. Note that the thickness of second flattening layer 7 and reflective layer 4 is much thinner than the thickness of fluorescent part 3 or the thickness of air layer 53 and thus is only slightly influential, so that the thickness of second flattening layer 7 and reflective layer 4 is ignored for the calculation of a critical angle $\theta c$.

On the other hand, assumed is a case where air layer 53 is not provided at joint part 5. Specifically, the aforementioned case refers to a case where joint part 5 is arranged immediately below reflective layer 4 in the irradiation region R and reflective layer 4 is not exposed. In the aforementioned case, where refractive index n1 of fluorescent part 3 as the incidence source is 1.8 and refractive index n2 of joint part 5 as the travel destination is 1.4 (refractive index when joint part 5 is formed of a silicone resin), the critical angle $\theta c$ is 51.1 degrees.

As described above, in the present embodiment, even compared to a case where air layer 53 is not provided at joint part 5, the critical angle $\theta c$ can be made small. In other words, it is possible to widen a range (90 degrees - $\theta c$) of the incidence angle $\theta$ of total internal reflection. As described above, not only the laser light L is directly incident on reflective layer 4 but also the white light released from each of fluorescent granules 34 is also incident. The incidence angles of the aforementioned white light on reflective layer 4 is various but a wide range of the incidence angles $\theta$ of the total internal reflection permits total internal reflection of more white light. Therefore, the reflectance at reflective layer 4 as the dielectric multilayer film can be improved. In particular, as described above, if reflective layer 4 is superposed on the rear surface of second flattening layer 7, the reflection performance of reflective layer 4 can be reliably exerted.

[Effects and Others]

As described above, color conversion element 1 according to the present embodiment includes: substrate 2; fluorescent part 3 which is arranged above substrate 2 and receives the laser light L from an outside and releases light of a color different from the color of the aforementioned laser light L; first flattening layer 6 which is superposed on a first main surface (surface 31) of fluorescent part 3 opposite to substrate 2; second flattening layer 7 which is superposed on a second main surface (rear surface 32) of fluorescent part 3 facing substrate 2; reflective layer 4 which is superposed on the main surface (rear surface) of second flattening layer 7 facing the substrate and formed of a dielectric multilayer film; and joint part 5 which lies between reflective layer 4 and substrate 2 and joins reflective layer 4 and substrate 2.

With the aforementioned configuration, first flattening layer 6 is superposed on surface 31 of fluorescent part 3. The surface roughness Ra of the surface of first flattening layer 6 is smaller than the surface roughness Ra of surface 31 of fluorescent part 3, which therefore makes it possible to suppress diffuse reflection of the laser light L and can make most of the laser light L enter into fluorescent part 3. That is, leak light can be suppressed.

On the other hand, second flattening layer 7 lies between rear surface 32 of fluorescent part 3 and the surface of reflective layer 4. The rear surface of second flattening layer 7 has smaller surface roughness Ra than rear surface 32 of fluorescent part 3, and thus reflective layer 4 is also superposed on the rear surface of second flattening layer 7 with a uniform layer thickness. Consequently, reflective layer 4 can more reliably exert the reflection performance.

Leak light can be suppressed and the reflectance at reflective layer 4 can be improved as described above, which can therefore improve the conversion efficiency of color conversion element 1.

Here, it is possible to improve the flatness of surface 31 and rear surface 32 of fluorescent part 3 by performing a polishing process on each of surface 31 and rear surface 32 of fluorescent part 3. However, the polishing process performed on fluorescent part 3 is not preferable since the polishing process leads to a significant cost increase. A method for superposing first flattening layer 6 and second flattening layer 7 on fluorescent part 3 as in the embodiment described above no longer requires the polishing process, making it possible to suppress the production costs.

Moreover, joint part 5 has air layer 53 which exposes reflective layer 4 at a position overlapping, in a plan view, at least part of the irradiation region R of fluorescent part 3 where the laser light L is irradiated.

With the aforementioned configuration, since air layer 53 overlaps at least part of the irradiation region R in a plan view, even compared to a case where air layer 53 is not provided, a range of the incidence angles θ of the total internal reflection (90 degrees - θc) can be made large. Therefore, it is possible to improve the reflectance at reflective layer 4 serving as the dielectric multilayer film and improve the conversion efficiency.

In particular, air layer 53 is formed at a position and with a size with which the entire irradiation region R can be stored in a plan view, which can therefore improve the reflectance for the entire irradiation region R. That is, the conversion efficiency can be improved.

Moreover, reflection suppressing layer 8 is superposed on the main surface (surface) of first flattening layer 6 opposite to fluorescent part 3.

With the aforementioned configuration, reflection suppressing layer 8 is superposed on the surface of first flattening layer 6, which can therefore suppress the reflection of the laser light L. Consequently, it is possible to make most of the laser light L reliably enter into fluorescent part 3.

Moreover, since the surface of first flattening layer 6 has smaller surface roughness Ra than surface 31 of fluorescent part 3, reflection suppressing layer 8 is also superposed on surface 31 of first flattening layer 6 with a uniform layer thickness, which permits reflection suppressing layer 8 to more reliably exert the reflection suppression performance.

Moreover, at least one of first flattening layer 6 and second flattening layer 7 has a visible light transmittance of 90% or more.

With the aforementioned configuration, at least one of first flattening layer 6 and second flattening layer 7 has a visible light transmittance of 90% or more. Thus, it is possible to suppress the absorption of light (laser light L) taken in by color conversion element 1 and light (white light) released by color conversion element 1 by first flattening layer 6 and second flattening layer 7. Therefore, the conversion efficiency of color conversion element 1 can be even more improved.

Moreover, second flattening layer 7 has a smaller refractive index than fluorescent part 3.

With the aforementioned configuration, since second flattening layer 7 has the smaller refractive index than fluorescent part 3, the reflectance of reflective layer 4 can be improved. Therefore, the conversion efficiency of color conversion element 1 can be even more improved.

Moreover, at least one of first flattening layer 6 and second flattening layer 7 has a thickness of 1.0 $\mu$m or more.

A thickness-wise interval between the vertex of the projection and the vertex of the recess of each of surface 31 and rear surface 32 of fluorescent part 3 is approximately 1.0 $\mu$m or less. If the thickness of at least one of first flattening layer 6 and second flattening layer 7 is 1.0 $\mu$m or more, it is possible to fill the recess of each of surface 31 and rear surface 32 of fluorescent part 3, which permits reliable flattening.

Moreover, at least one of first flattening layer 6 and second flattening layer 7 is formed of SiO$_2$.

With the aforementioned configuration, at least one of first flattening layer 6 and second flattening layer 7 is formed of SiO$_2$, which can therefore improve the heat resistance of first flattening layer 6 and second flattening layer 7. Therefore, it is possible to realize color conversion element 1 which is stable for a long term, which consequently makes it possible to stabilize the conversion efficiency at super regulation.

Moreover, the main surface (rear surface) of second flattening layer 7 facing reflective layer 4 has a surface roughness Ra of 20 nm or less.

With the aforementioned configuration, since the rear surface of second flattening layer 7 has a surface roughness Ra of 20 nm or less, which therefore makes it possible to suppress a deterioration in the reflectance.

FIG. 3 is a graph illustrating relation between the surface roughness Ra and the reflectance of a base material on which reflective layer 4 according to the embodiment is superposed. As illustrated in FIG. 3, it can be found that the reflectance deterioration decreases with a decrease in the surface roughness Ra of the base material in a range between 450 nm and 800 nm. Thus, the surface roughness Ra of the rear surface of second flattening layer 7 on which reflective layer 4 is superposed is set to 20 nm or less. Note that the reflectance deterioration can be more suppressed when the surface roughness Ra of the rear surface of second flattening layer 7 is 10 nm or less, the reflectance deterioration can be suppressed when the aforementioned surface roughness Ra is 5 nm or less, and the reflectance deterioration can be even more suppressed when the aforementioned surface roughness Ra is 2 nm or less.

Moreover, fluorescent part 3 is formed by arraying a plurality of pieces 33 of a sheet like shape including at least one type of a fluorescent material (fluorescent granules 34) in a plane.

With the aforementioned configuration, fluorescent part 3 is formed by the plurality of pieces 33 arrayed in a plane, which therefore makes it possible to disperse stress acting upon heating. Consequently, the deformation of fluorescent part 3 occurring upon the reception of the laser light L can be suppressed. Therefore, it is possible to stabilize the positional relation between fluorescent part 3 and air layer 53 and maintain stable reflection characteristics.

Here, in case of a fluorescent part which is integrally formed as a whole, if the fluorescent part has an annular shape in a plan view, the stress concentration is weak and the problem described above is likely to occur. However, as is the case with the present embodiment, with fluorescent part 3 formed by arranging the plurality of pieces 33 in an annular form, the stress can be dispersed, which can provide high stress relaxation effect.

Note that illustrated in the embodiment described above is the case where fluorescent part 3 is formed from the plurality of pieces 33. However, the fluorescent part may be an integral product that is integrally molded as a whole.

[Variation 1]

Next, Variation 1 will be described. FIG. 4 is a sectional view illustrating a schematic configuration of color conversion element 1A according to Variation 1 and, more specifically, a view corresponding to FIG. 2. Note that portions equivalent to the portions of color conversion element 1 according to the embodiment will be provided with the same signs in the description below and omitted from the description and only different portions will be described.

The embodiment described above refers to the case where reflection suppressing layer 8 is superposed on the surface of first flattening layer 6. In Variation 1, no reflection suppressing layer is provided on the surface of first flattening layer 6a and the aforementioned surface is exposed. Uneven structure 63a formed of a plurality of recesses 61a and projections 62a of fine sizes is formed across the entire surface of first flattening layer 6a. Uneven structure 63a is formed by, for example, performing wet blasting on first flattening layer 6a having a surface not provided with uneven structure 63a. As described above, first flattening layer 6a is formed of transparent resin or $SiO_2$. The material (glass or ceramic) forming base material 35 of fluorescent part 3 is more fragile than the aforementioned materials, and thus performing the wet blasting on fluorescent part 3 may cause cracking of fluorescent part 3. Performing the wet blasting on first flattening layer 6a makes it possible to protect fluorescent part 3 itself.

As described above, the main surface (surface) of first flattening layer 6a opposite to fluorescent part 3 has fine uneven structure 63a.

With the aforementioned configuration, since fine uneven structure 63a is formed on the surface of first flattening layer 6a, the reflectance of the aforementioned surface can be reduced, which can improve light extraction efficiency and light capture efficiency.

[Variation 2]

Next, Variation 2 will be described. FIG. 5 is a sectional view illustrating a schematic configuration of color conversion element 1B according to Variation 2 and more specifically a view corresponding to FIG. 2. Note that portions equivalent to the portions of color conversion element 1 according to the embodiment will be provided with the same signs and omitted from the description below, and only different portions will be described.

Illustrated in the embodiment described above is the case where reflection suppressing layer 8 is superposed on the surface of first flattening layer 6. In Variation 2, no reflection suppressing layer is provided on the surface of first flattening layer 6b and the aforementioned surface is exposed. First flattening layer 6b includes: base 65b which is light transmissive; and a plurality of hollow granules 64b which are dispersed in base 65b. That is, the plurality of hollow granules 64b are filled in a dispersed manner at first flattening layer 6b.

Base 65b is formed by the aforementioned material which is light transmissive. Hollow granules 64b have an outer shell formed of a material which is light transmissive and an inside of hollow granules 64b forms a hollow containing the air. Examples of the material which forms the outer shell of hollow granules 64b include $SiO_2$. That is, hollow granules 64b can also be referred to as hollow silica. The hollow silica is preferable in that the hollow silica can be more easily produced than the other hollow granules.

Hollow granules 64b may be filled as a whole in base 65b, and thus the diameter of hollow granules 64b is smaller than the thickness of base 65b. Further, the diameter of hollow granules 64b may be smaller than the wavelength of the laser light L. As described above, the wavelength of the laser light L is in a value within a range of 430 nm to 490 nm, and thus the diameter of hollow granules 64b is in a value less than or equal to the aforementioned value. Consequently, the interference between the laser light L and hollow granules 64b can be suppressed. For example, when the wavelength of the laser light L is 450 nm, the diameter of hollow granules 64b may be smaller than 450 nm. Further, setting the diameter of hollow granules 64b to a value less than or equal to one tenth of the wavelength of the laser light L can increase the content amount, which therefore permits a further decrease in the refractive index and improvement in Fresnel loss reduction effect. More specifically, the diameter of hollow granules 64b is less than or equal to 40 nm.

As described above, first flattening layer 6b includes the plurality of hollow granules 64b dispersed. Consequently, it is possible to reduce the refractive index of first flattening layer 6b, which can suppress the dispersion of the light, which has been released from fluorescent part 3, at first flattening layer 6b.

[Variation 3]

Next Variation 3 will be described. FIG. 6 is a sectional view illustrating a schematic configuration of color conversion element 1C according to Variation 3 and more specifically a view corresponding to FIG. 2. Note that portions equivalent to the portions of color conversion element 1 according to the embodiment will be provided with the same signs and will be omitted from the description below and only different portions will be described.

Illustrated in the embodiment above is the case where joint part 5 has air layer 53. Illustrated in Variation 3 is a case where joint part 5c has no air layer. That is, joint part 5c covers the entire rear surface of reflective layer 4. Consequently, joint part 5c is arranged at a position of fluorescent part 3 overlapping the entire irradiation region R in a plan view. Here, joint part 5c is formed of a silicone resin containing at least one of an oxide and a nitride. Examples of the oxide include $TiO_2$, $ZnO$, and $Al_2O_3$.

As described above, joint part 5c is formed of the silicone resin containing at least one of an oxide and a nitride, and is arranged at a position, in a plan view, overlapping the entire irradiation region R of fluorescent part 3 where the laser light L is irradiated.

Consequently, joint part 5c makes direct contact with the irradiation region R in fluorescent part 3, and thus a heat from a section of fluorescent part 3 where the greatest heat generation occurs (the irradiation region R) can be conducted to substrate 2 through joint part 5c. Therefore, heat dissipation can be improved. In particular, since joint part 5c is formed of the silicone resin containing at least one of an oxide and a nitride, the heat conductivity of joint part 5c as a single body is improved, and even higher heat dissipation effect can be exerted.

Note that a certain level of heat dissipation effect can be provided even when joint part 5c overlaps, in a plan view, at least part of the irradiation region R in fluorescent part 3.

[Variation 4]

Next, Variation 4 will be described. FIG. 7 is a sectional view illustrating a schematic configuration of color conversion element 1D according to Variation 4 and more specifically a view corresponding to FIG. 4. Note that in the description below, portions equivalent to the portions of color conversion element 1A according to Variation 1 will be provided with the same signs and omitted from the description below, and only different portions will be described.

Illustrated in Variation 1 described above is the case where joint part 5 has air layer 53. A case where joint part 5d has no air layer will be illustrated in Variation 4. That is, joint part 5d covers the entire rear surface of reflective layer 4. Consequently, joint part 5d is arranged at a position, in a plan view, overlapping the entire irradiation region R in fluorescent part 3. Here, joint part 5d is formed of silicone resin containing at least one of an oxide and a nitride.

Since joint part 5d makes direct contact with the irradiation region R in fluorescent part 3 in Variation 4, heat from a portion of fluorescent part 3 (the irradiation region R) where the greatest heat generation occurs can be conducted to substrate 2 through joint part 5d. Therefore, the heat dissipation performance can be improved. Note that a certain level of heat dissipation effect can be provided even when joint part 5d overlaps at least part of the irradiation region R in fluorescent part 3 in a plan view.

[Variation 5]

Next, Variation 5 will be described. FIG. 8 is a sectional view illustrating a schematic configuration of color conversion element 1E according to Variation 5 and more specifically a view corresponding to FIG. 5. Note that portions equivalent to the portions of color conversion element 1B according to Variation 2 will be provided with the same signs and omitted from the description below and only different portions will be described.

Illustrated in Variation 2 above is the case where joint part 5 has air layer 53. A case where joint part 5e has no air layer will be illustrated in Variation 5. That is, joint part 5e covers the entire rear surface of reflective layer 4. Consequently, joint part 5e is arranged at a position in a plan view overlapping the entire irradiation region R. Here, joint part 5e is formed from silicone resin containing at least one of an oxide and a nitride.

In Variation 5, since joint part 5e makes direct contact with the irradiation region R in fluorescent part 3, a heat from a portion in fluorescent part 3 (the irradiation region R) where the greatest heat generation occurs can be conducted to substrate 2 through joint part 5e. Therefore, the heat dissipation can be improved. Joint part 5e can provide a certain level of heat dissipation effect even when overlapping at least part of the irradiation region R in fluorescent part 3.

[Variation 6]

Next, Variation 6 will be described. FIG. 9 is a sectional view illustrating a schematic configuration of color conversion element 1F according to Variation 6 and more specifically a view corresponding to FIG. 5. Note that portions equivalent to the portions of Variation 2 will be provided with the same signs and omitted from the description below and only different portions will be described.

Illustrated in Variation 2 above is the case where first flattening layer 6b has a single layer structure. Illustrated in Variation 6 is a case where first flattening layer 6f has a plural layer structure.

As illustrated in FIG. 9, first flattening layer 6f includes: first layer 610f which is superposed on surface 31 of fluorescent part 3; second layer 620f which is superposed on a surface of first layer 610f opposite to fluorescent part 3.

First layer 610f is flattened by directly covering surface 31 of fluorescent part 3 to fill a small recess of surface 31. Thus, the surface roughness Ra of the surface of first layer 610f is smaller than the surface roughness Ra of surface 31 of fluorescent part 3. Second layer 620f directly covers the surface of first layer 610f and the surface roughness Ra of the surface of second layer 620f is greater than or equal to the surface roughness Ra of first layer 610f.

First layer 610f does not include hollow granules 64b and a plurality of hollow granules 64b are dispersed at second layer 620f.

First layer 610f and base 65b of second layer 620f are only required to be each formed of an $SiO_2$-based material. The material forming first layer 610f and the material forming base 65b of second layer 620f may be completely identical materials or may have different additives as long as the materials are $SiO_2$-based. Further, the material forming base 65b of second layer 620f preferably has a lower refractive index than the material forming first layer 610f in term of Fresnel loss reduction.

As described above, with color conversion element 1F according to Variation 6, first flattening layer 6f includes: first layer 610f which is superposed on surface 31 of fluorescent part 3; and second layer 620f which is superposed on a surface of first layer 610f opposite to fluorescent part 3. No granules are included in first layer 610f, and a plurality of granules (hollow granules 64b) are dispersed in second layer 620f.

Consequently, first layer 610f including no granules is superposed on surface 31 of fluorescent part 3, achieving the flattening of surface 31 by first flattening layer 610f. Specifically, the surface of first layer 610f has smaller surface roughness Ra than surface 31 of fluorescent part 3, which can therefore suppress diffuse reflection of the laser light L passing through second layer 620f, making it possible for most of the laser light L to more reliably enter into fluorescent part 3. Therefore, much light is taken into fluorescent part 3, which can also increase light released from fluorescent part 3.

[Variation 7]

Next, Variation 7 will be described. FIG. 10 is a sectional view illustrating a schematic configuration of color conversion element 1G according to Variation 7 and more specifically a view corresponding to FIG. 9. Note that portions equivalent to the portions of Variation 6 will be provided with the same signs and omitted from the description below and only different portions will be described.

Illustrated in Variation 6 described above is the case where first flattening layer 6f has a two-layer structure. Illustrated in Variation 7 is a case where first flattening layer 6g has a four-layer structure.

As illustrated in FIG. 10, first flattening layer 6g includes: first layer 610f; second layer 620g which is superposed on a surface of first flattening layer 610f opposite to fluorescent part 3; third layer 630g which is superposed on a surface of second layer 620g opposite to fluorescent part 3; and fourth layer 640g which is superposed on a surface of third layer 630g opposite to fluorescent part 3.

Here, first layer 610f does not include hollow granules 64b but second layer 620g, third layer 630g, and fourth layer 640g have a plurality of hollow granules 64b dispersed therein. More specifically, relation in the concentration (density) of hollow granules 64b is second layer 620g < third layer 630g < fourth layer 640g. As described above, the concentration of the plurality of hollow granules 64b at each of the layers (first layer 610f to fourth layer 640g) is determined so as to gradually increase with an increase in a distance from fluorescent part 3 when first flattening layer 6g is viewed as a whole. Consequently, the refractive index decreases in first flattening layer 6g with an increase in a distance from fluorescent part 3. That is, the refractive index of first flattening layer 6g more approaches the refractive index of the air with an increase in the distance from fluorescent part 3. For example, the refractive index of first layer 610f is 1.5, the refractive index of second layer 620g is 1.4, the refractive index of third layer 630g is 1.3, and the refractive index of fourth layer 640g is 1.2, indicating that the refractive index more approaches the refractive index of the air with an increase in the distance from fluorescent part 3.

Moreover, materials forming the respective bases of the layers are each only required to be formed

of a SiO$_2$-based material. The materials forming the respective bases of the layers may be completely identical materials or may have different additives as long as the materials are SiO$_2$ based. Even in the aforementioned case, it is better to select materials such that the refractive indices formed by the respective bases of the layers gradually decrease with an increase in the distance from fluorescent part 3.

As a method for producing first flattening layer 6g, for example, amounts of hollow granules 64b in accordance with the respective levels of concentration are added to a SiO$_2$-based power material to thereby produce a plurality of prepared materials corresponding to the respective layers. Then the prepared material forming first layer 610f is arranged on surface 31 of fluorescent part 3 to be sintered, thereby forming first layer 610f. Next, the prepared material forming second layer 620g is arranged on the surface of first layer 610f to be sintered, thereby forming second layer 620g. Next, the prepared material forming third layer 630g is arranged on the surface of second layer 620g to be sintered, thereby forming third layer 630g. Then the prepared material forming fourth layer 640g is arranged on the surface of third layer 630g to be sintered, thereby forming fourth layer 640g. Consequently, first flattening layer 6g is formed.

As described above, with color conversion element 1G according to Variation 7, the concentration of the plurality of granules (hollow granules 64b) in first flattening layer 6g gradually increases with an increase in the distance from fluorescent part 3.

Consequently, the refractive index in first flattening layer 6g decreases with an increase in the distance from fluorescent part 3. Therefore, it is possible to remarkably reduce the Fresnel loss.

Moreover, first flattening layer 6g is formed of the plurality of layers (first layer 610f, second layer 620g, third layer 630g, and fourth layer 640g), and the concentration of the plurality of granules (hollow granules 64b) in each of the layers is determined so as to gradually increase with an increase in the distance from fluorescent part 3 when first flattening layer 6g is viewed as a whole.

With the aforementioned configuration, first flattening layer 6g is formed with the plurality of layers having the different concentration of hollow granules 64b, which therefore makes it easy to control the concentration of hollow granules 64b at each of the layers upon the production thereof. Therefore, it is easy to control the refractive index of each layer.

Note that the first flattening layer may have a three-layer structure or a five- or more- layer structure.

[Variation 8]

Next, Variation 8 will be described. FIG. 11 is a sectional view illustrating a schematic configuration of color conversion element 1H according to Variation 8 and more specifically a view corresponding to FIG. 5. Note that portions equivalent to the portions of Variation 2 will be provided with the same signs and omitted from the description below and only different portions will be described.

Illustrated in Variation 7 described above is the case where first flattening layers 6g is formed of the plurality of layers and the concentration levels of the plurality of hollow granules 64b at the respective layers differ from each other. In Variation 8, first flattening layer 6h is a single layer in which the concentration levels of hollow granules 64b differ from each other. More specifically, the concentration levels of the plurality of hollow granules 64b in first flattening layer 6h gradually increase with an increase in the distance from fluorescent part 3. Consequently, the refractive index in first flattening layer 6h decreases with an increase in the distance from fluorescent part 3. Therefore, it is possible to remarkably reduce the Fresnel loss.

[Variation 9]

Illustrated in the embodiment described above is the case where color conversion element 1 is applied to a projection device, but it is also possible to use the color conversion element as an illumination device. In the aforementioned case, the color conversion element does not rotate and thus may not be formed into a wheel shape. Hereinafter, a description will be given, referring to one example of a color conversion element used for the illumination device.

FIG. 12 is a schematic view illustrating a schematic configuration of illumination device 100 according to Variation 9. As illustrated in FIG. 12, illumination device 100 includes light source part 101, light guide member 102, and color conversion element 1I. Note that a first flattening layer, a second flattening layer, and a reflection suppressing layer included in color conversion element 1I are omitted from an illustration in FIG. 12.

Light source part 101 is a device which generates laser light L1 and supplies laser light L1 to color conversion element 1I through light guide member 102. For example, light source part 101 is a semiconductor laser element which radiates laser light L1 of wavelengths of blue purple to blue (430 to 490 nm). Light guide member 102 is a light guide member, for example, a light fiber, which guides, to color conversion element 1I, laser light L1 radiated by light source part 101.

Substrate 2i of color conversion element 1I has a rectangular shape in a plan view and has one surface 22i on which reflective layer 4i and fluorescent part 3i are superposed with joint part 5i in between. Fluorescent part 3i is formed into a rectangular shape in a plan view and has a main surface facing substrate 2i on which reflective layer 4i formed of a dielectric multilayer film is superposed. Joint part 5i is formed into a frame shape which is continuous to the outer periphery of fluorescent part 3i. Consequently, air layer 53i which exposes reflective layer 4i is formed inside of joint part 5i. Air layer 53i is arranged at a position overlapping, in a plan view, irradiation region R1 where laser light L1 is irradiated.

Air layer 53i exposes reflective layer 4i at a position overlapping, in a plan view, at least part of irradiation region R1 in fluorescent part 3i in illumination device 100 according to Variation 9. Thus, compared to a case where air layer 53i is not provided, a range (90 degrees - θc) of incidence angles of the total internal reflection can be increased. Therefore, it is possible to improve the reflectance of reflective layer 4i serving as a dielectric multilayer film and improve the conversion efficiency.

Note that a fluorescent part may be formed of a plurality of pieces in the color conversion element used for the illumination device.

[Variation 10]

Next, Variation 10 will be described. FIG. 13 is a sectional view illustrating a schematic configuration of color conversion element 1J according to Variation 10 and more specifically a view corresponding to FIG. 2. Note that portions equivalent to the portions of color conversion element 1 according to the embodiment will be provide with same signs and omitted from the description below, and only different portions will be described.

Illustrated in the embodiment described above is the case where reflection suppressing layer 8 such as an AR coat layer is superposed on the surface of first flattening layer 6. In color conversion element 1J according to Variation 10, reflection suppressing layer 8j different from the AR coat layer is superposed on the surface of first flattening layer 6.

Reflection suppressing layer 8j includes: base layer 81j which is light transmissive; and a plurality of air bubbles 82j which are dispersed in base layer 81j.

Base layer 81j is formed of the aforementioned material which is light transmissive. Air bubbles 82j are formed of the air and filled in base layer 81j. Thus, the diameter of air bubbles 82j is smaller than the thickness of base layer 81j. Further, it is better that the diameter of air bubbles 82j be smaller than the wavelength of the laser light L. As described above, the wavelength of the laser light L is in a value falling within the range of 430 nm to 490 nm and thus the diameter of air bubbles 82j is in a value less than or equal to the aforementioned value. Consequently, the interference between the laser light L and air bubbles 82j can be suppressed. For example, when the wavelength of the laser light L is 450 nm, the diameter of air bubbles 82j may be smaller than 450 nm. Further, setting the diameter of air bubbles 82j to be less than or equal to one tenth of the wavelength of the laser light L makes it possible to more increase the content, which can therefore more decrease the refractive index and can improve the effect of Fresnel loss reduction. More specifically, the diameter of air bubbles 82j is less than or equal to 40 nm.

As described above, since reflection suppressing layer 8j has the plurality of air bubbles 82j dispersed in base layer 81j which is light transmissive, the Fresnel loss reduction effect can be improved and the reflection of the laser light L can be suppressed.

Here, forming the AR coat layer as reflection suppressing layer 8 requires a dry process. Vacuuming a work region is required in order to carry out the dry process, which therefore leads to upsizing of a production device. On the other hand, base layer 8j in which the plurality of air bubbles 82j are dispersed is formed in reflection suppressing layer 8j according to the present variation, but it can be formed through a wet process which requires no vacuuming. That is, the upsizing of the production device can be suppressed, which makes it possible to consequently reduce the production costs.

[Variation 11]

Next, Variation 11 will be described. FIG. 14 is a sectional view illustrating a schematic configuration of color conversion element 1K according to Variation 11 and more specifically a view corresponding to FIG. 13. Note that portions equivalent to the portions of color conversion element 1J according to Variation 10 will be provided with the same signs and omitted from the description below and only different portions will be described.

Illustrated in Variation 10 is the case where air bubbles 82j are simply dispersed in base layer 81j. In color conversion element 1K according to Variation 11, a space defined by a plurality of fine granules 83k aggregated are provided as air bubbles 82k.

More specifically, reflection suppressing layer 8k included in color conversion element 1K has: base layer 81k which is formed by the aforementioned material which is light transmissive; and a plurality of fine granule groups 84k which are dispersed in base layer 81k.

The plurality of fine granule groups 84k are each in a state in which the plurality of fine granules 83k are aggregated. Fine granules 83k are formed of, for example, a material, such as $SiO_2$, which is light transmissive. Fine granules 83k are hollow granules. A space closed as a result of aggregating the plurality of fine granules 83k is formed at the center of fine granule groups 84k. The aforementioned space corresponds to air bubbles 82k. Air bubbles 82k desirably have the same size as the size of air bubbles 82j according to Variation 10. Moreover, fine granules 83k also desirably have the same size as the size of hollow granules 64b according to Variation 2.

Reflection suppressing layer 8k including the plurality of fine granule groups 84k in such base layer 81k is formed by, for example, a known Sol-gel method as one example of a wet process. Thus, reflection suppressing layer 8k can also be referred to as a Sol-gel layer.

As described above, reflection suppressing layer 8k has, as air bubbles 82k, the space defined by the plurality of fine granules 83k aggregated in base layer 81k, which can therefore improve the Fresnel loss reduction effect by the plurality of air bubbles 82k and can suppress the reflection of the laser light L.

[Variation 12]

Next, Variation 12 will be described. FIG. 15 is a sectional view illustrating a schematic configuration of color conversion element 1M according to Variation 12 and more specifically a view corresponding to FIG. 5. Note that portions equivalent to the portions of color conversion element 1B according to Variation 2 will be provided with the same signs and omitted from the description below, and only different portions will be described.

Illustrated in Variation 2 is a case where first flattening layer 6b includes: base 65b; and the plurality of hollow granules 64b which are dispersed in base 65b. A case where the plurality of air bubbles 82m are dispersed as granules in base 65m of first flattening layer 6m in color conversion element 1M according to Variation 12 will be illustrated.

First flattening layer 6m includes: base 65m which is light transmissive; and the plurality of air bubbles 82m which are dispersed in base 65m. Base 65m is formed by the aforementioned material which is light transmissive. Air bubbles 82m are air bubbles formed of the air and filled in base 65m. Note that air bubbles 82m may be a space defined by the plurality of fine granules aggregated. Air bubbles 82k may have the same size as the size of air bubbles 82j according to Variation 10.

As described above, since first flattening layer 6m has the plurality of air bubbles 82m dispersed in base 65m which is light transmissive, the Fresnel loss reduction effect can be improved and the reflection of the laser light L can be suppressed. That is, first flattening layer 6m can be caused to function as a reflection suppressing layer.

[Other Embodiments]

The illumination device according to the present invention has been described based on the embodiment and the variations above, but the present invention is not limited to the embodiment and variations described above.

For example, illustrated in the embodiment above is the case where fluorescent part 3 is, as a whole, formed of pieces 33 which radiate white light. However, in a case where fluorescent part emits light of a plurality of colors, a portion of fluorescent part where the light of each color is radiated is formed by the same type of pieces. For example, assumed is a case where three layers of a red fluorescent part, a green fluorescent part, and a blue fluorescent part are arrayed in plane. The red fluorescent part is formed by the plurality of pieces of the same type including a red fluorophore. The blue fluorescent part is formed by the plurality of pieces of the same type including a blue fluorophore. The green fluorescent part is formed by the plurality of pieces of the same type including a green fluorophore.

Moreover, hollow granules 64b, etc. are illustrated in Variation 2, etc. However, the granules dispersed in the base of the first flattening layer may be solid granules. When the aforementioned granules are solid granules, the refractive index of the aforementioned granules may be smaller than the refractive index of the base of the first flattening layer. Consequently, the refractive index of the first flattening layer can be reduced, and Fresnel reflection of the irradiated laser light L on the surface of first flattening layer can be suppressed.

In addition, the present invention also includes: a mode obtained by making various modifications, conceivable to those skilled in the art, to the embodiment; and a mode realized by combining together the components and the functions in the embodiment and the variations in a desired manner within a range not departing from the appended claims.

[Reference Signs List]

1, 1A, 1B, 1C, 1D, 1E, 1F, 1G, 1H, 1I, 1J, 1K, 1M color conversion element
2, 2i substrate
3, 3i fluorescent part
4, 4i reflective layer
5, 5c, 5d, 5e, 5i joint part
6, 6a, 6b, 6f, 6g, 6h, 6m first flattening layer
7 second flattening layer
8, 8j, 8k reflection suppressing layer
31 surface (first main surface)
32 rear surface (second main surface)
53, 53i air layer
63a uneven structure
64b hollow granules (granules)
65b, 65m base
81j, 81k base layer
82j, 82k, 82m air bubbles
83k fine granules
610f first layer
620f, 620g second layer
630g third layer
640g fourth layer
L, L1 laser light
R, R1 irradiation region

**Claims**

1.  A color conversion element (1), comprising:

    a substrate (2);
    a fluorescent part (3) which is arranged above the substrate (2), receives laser light (L) from an outside, and emits light of a color different from a color of the laser light (L);

a first flattening layer (6) which is superposed on a first main surface (31) of the fluorescent part (3) opposite to the substrate (2);

a second flattening layer (7) which is superposed on a second main surface (32) of the fluorescent part (3) facing the substrate (2);

a reflective layer (4) which is superposed on a main surface of the second flattening layer (7) facing the substrate (2) and formed of a dielectric multilayer film; and

a joint part (5) which lies between the reflective layer (4) and the substrate (2) and joins together the reflective layer (4) and the substrate (2), wherein

the surface roughness Ra of a main surface of the first flattening layer (6) opposite to the fluorescent part (3) is smaller than the surface roughness Ra of the first main surface (31) of the fluorescent part (3), the surface roughness Ra of the main surface of the second flattening layer (7) on which the reflective layer (4) is superposed is smaller than the surface roughness Ra of the second main surface (32) of the fluorescent part (3),

the reflective layer (4) reflects light, which is laser light (L) and light emitted from the fluorescent part (3), transmitted through the second flattening layer (7), and

at a position overlapping, in a plan view, at least part of an irradiation region (R) of the fluorescent part (3) irradiated by the laser light (L), the joint part (5) includes an air layer (53) which exposes the reflective layer (4).

2. The color conversion element (1) according to claim 1, wherein
a reflection suppressing layer (8) is superposed on the main surface of the first flattening layer (6) opposite to the fluorescent part (3).

3. The color conversion element (1) according to claim 2, wherein
the reflection suppressing layer (8, 8j, 8k) includes: a base layer (81j, 81k) which is light transmissive; and a plurality of air bubbles (82j, 82k) which are dispersed in the base layer (81j, 81k).

4. The color conversion element (1) according to claim 3, wherein
the plurality of air bubbles (82j, 82k) correspond to a space defined by a plurality of fine granules (83k) aggregated.

5. The color conversion element (1) according to claim 3 or 4, wherein
a diameter of the plurality of air bubbles (82j, 82k) is smaller than a wavelength of the laser light (L).

6. The color conversion element (1) according to claim 1, wherein

the first flattening layer (6, 6b, 6m) includes: a base (65b, 65m) which is light transmissive; and a plurality of granules (64b, 82m) which are dispersed in the base, and
the plurality of granules (64b, 82m) have a smaller refractive index than the base (65b, 65m).

7. The color conversion element (1) according to claim 6, wherein
the plurality of granules (64b, 82m) correspond to air bubbles (82m).

8. The color conversion element (1) according to claim 7, wherein
the air bubbles (82m) correspond to a space formed of a plurality of fine granules aggregated.

9. The color conversion element (1) according to claim 6, wherein
the plurality of granules (64b, 82m) correspond to hollow granules (64b).

10. The color conversion element (1) according to any one of claims 6 to 9, wherein

the first flattening layer (6, 6f) includes: a first layer (610f) which is superposed on the first main surface (31) of the fluorescent part (3); and a second layer (620f) which is superposed on a surface of the first layer opposite to the fluorescent part (3),
the first layer (610f) does not include the plurality of granules (64b, 82m), and
the plurality of granules (64b, 82m) are dispersed in the second layer (620f).

11. The color conversion element (1) according to any one of claims 6 to 10, wherein
a diameter of the plurality of granules (64b, 82m) is smaller than a wavelength of the laser light (L).

12. The color conversion element (1) according to any one of claims 6 to 11, wherein
concentration of the plurality of granules (64b, 82m) gradually increases with an increase in a distance from the fluorescent part (3) in the first flattening layer (6).

13. The color conversion element (1) according to claim 12, wherein

the first flattening layer (6, 6g) is formed of a plurality of layers (610f, 620g, 630g, 640g), and

the concentration of the plurality of granules (64b, 82m) in each of the layers is determined so as to gradually increase with an increase in the distance from the fluorescent part (3) when the first flattening layer (6, 6g) is viewed as a whole.

14. The color conversion element (1) according to any one of claims 1 to 13, wherein
at least one of the first flattening layer (6, 6g) and the second flattening layer (7) has a visible light transmittance of 90% or more.

15. The color conversion element (1) according to any one of claims 1 to 14, wherein
the second flattening layer (7) has a smaller refractive index than the fluorescent part (3).

16. The color conversion element (1) according to any one of claims 1 to 15, wherein
at least one of the first flattening layer (6) and the second flattening layer (7) has a thickness of $1.0\ \mu m$ or more.

17. The color conversion element (1) according to claim 16, wherein
a thickness-wise interval between the vertex of a projection and the vertex of a recess of each of the first main surface (31) and the second main surface (32) of the fluorescent part (3) is $1.0\ \mu m$ or less.

18. The color conversion element (1) according to any one of claims 1 to 17, wherein
at least one of the first flattening layer (6, 6b, 6m, 6f, 6g) and the second flattening layer (7) is formed of $SiO_2$.

19. The color conversion element (1) according to any one of claims 1 to 18, wherein
the main surface of the second flattening layer (7) facing the reflective layer (4) has a surface roughness Ra of 20 nm or less.

**Patentansprüche**

1. Farbumwandlungselement (1), umfassend:

ein Substrat (2);
einen fluoreszierenden Teil (3), der oberhalb des Substrats (2) angeordnet ist, Laserlicht (L) von außen empfängt und Licht einer Farbe, anders als eine Farbe des Laserlichts (L), emittiert;
eine erste Abflachungsschicht (6), die auf einer ersten Hauptoberfläche (31) des fluoreszierenden Teils (3) gegenüber dem Substrat (2) angeordnet ist;

eine zweite Abflachungsschicht (7), die auf einer zweiten Hauptoberfläche (32) des fluoreszierenden Teils (3), die dem Substrat (2) zugewandt ist, angeordnet ist;
eine reflektierende Schicht (4), die auf einer Hauptoberfläche der zweiten Abflachungsschicht (7), die dem Substrat (2) zugewandt ist, angeordnet ist und aus einem dielektrischen Mehrschichtfilm gebildet ist; und
ein Verbindungsteil (5), der zwischen der reflektierenden Schicht (4) und dem Substrat (2) liegt und die reflektierende Schicht (4) mit dem Substrat (2) verbindet,
wobei
die Oberflächenrauhigkeit Ra einer Hauptoberfläche der ersten Abflachungsschicht (6) gegenüber dem fluoreszierenden Teil (3) kleiner ist als die Oberflächenrauhigkeit Ra der ersten Hauptoberfläche (31) des fluoreszierenden Teils (3),
die Oberflächenrauhigkeit Ra der Hauptoberfläche der zweiten Abflachungsschicht (7), auf der die reflektierende Schicht (4) angeordnet ist, kleiner ist als die Oberflächenrauhigkeit Ra der zweiten Hauptoberfläche (32) des fluoreszierenden Teils (3),
die reflektierende Schicht (4) Licht reflektiert, das Laserlicht (L) und vom fluoreszierenden Teil (3) emittiertes Licht, übertragen durch die zweite Abflachungsschicht (7), ist, und
an einer Position, die in einer Draufsicht zumindest einen Teil eines Bestrahlungsbereichs (R) des fluoreszierenden Teils (3), bestrahlt durch das Laserlicht (L), überlappt, der Verbindungsteil (5) eine Luftschicht (53) einschließt, die die reflektierende Schicht (4) freilegt.

2. Farbumwandlungselement (1) nach Anspruch 1, wobei
eine Reflexionsunterdrückungsschicht (8) auf der Hauptoberfläche der ersten Abflachungsschicht (6) gegenüber dem fluoreszierenden Teil (3) angeordnet ist.

3. Farbumwandlungselement (1) nach Anspruch 2, wobei
die Reflexionsunterdrückungsschicht (8, 8j, 8k) einschließt: eine Basisschicht (81j, 81k), die lichtdurchlässig ist; und eine Mehrzahl von Luftblasen (82j, 82k), die in der Basisschicht (81j, 81k) dispergiert sind.

4. Farbumwandlungselement (1) nach Anspruch 3, wobei
die Mehrzahl von Luftblasen (82j, 82k) einem Raum entspricht, der durch eine Mehrzahl von aggregierten feinen Körnern (83k) definiert ist.

5. Farbumwandlungselement (1) nach Anspruch 3 oder 4, wobei
ein Durchmesser der Mehrzahl von Luftblasen (82j, 82k) kleiner ist als eine Wellenlänge des Laserlichts (L).

6. Farbumwandlungselement (1) nach Anspruch 1, wobei

   die erste Abflachungsschicht (6, 6b, 6m) einschließt: eine Basis (65b, 65m), die lichtdurchlässig ist; und eine Mehrzahl von Körnern (64b, 82m), die in der Basis dispergiert sind, und
   die Mehrzahl von Körnern (64b, 82m) einen kleineren Brechungsindex als die Basis (65b, 65m) aufweist.

7. Farbumwandlungselement (1) nach Anspruch 6, wobei
   die Mehrzahl von Körnern (64b, 82m) Luftblasen (82m) entspricht.

8. Farbumwandlungselement (1) nach Anspruch 7, wobei
   die Luftblasen (82m) einem Raum entsprechen, der aus einer Mehrzahl von aggregierten feinen Körnern gebildet ist.

9. Farbumwandlungselement (1) nach Anspruch 6, wobei
   die Mehrzahl von Körnern (64b, 82m) hohlen Körnern (64b) entspricht.

10. Farbumwandlungselement (1) nach einem der Ansprüche 6 bis 9, wobei

    die erste Abflachungsschicht (6, 6f) einschließt: eine erste Schicht (610f), die auf der ersten Hauptoberfläche (31) des fluoreszierenden Teils (3) angeordnet ist; und eine zweite Schicht (620f), die auf einer Oberfläche der ersten Schicht gegenüber dem fluoreszierenden Teil (3) angeordnet ist,
    die erste Schicht (610f) die Mehrzahl von Körnern (64b, 82m) nicht einschließt, und
    die Mehrzahl von Körnern (64b, 82m) in der zweiten Schicht (620f) dispergiert ist.

11. Farbumwandlungselement (1) nach einem der Ansprüche 6 bis 10, wobei
    ein Durchmesser der Mehrzahl von Körnern (64b, 82m) kleiner ist als eine Wellenlänge des Laserlichts (L).

12. Farbumwandlungselement (1) nach einem der Ansprüche 6 bis 11, wobei
    eine Konzentration der Mehrzahl von Körnern (64b, 82m) in der ersten Abflachungsschicht (6) mit einer Zunahme eines Abstands von dem fluoreszierenden Teil (3) graduell zunimmt.

13. Farbumwandlungselement (1) nach Anspruch 12, wobei

    die erste Abflachungsschicht (6, 6g) aus einer Mehrzahl von Schichten (610f, 620g, 630g, 640g) gebildet ist, und
    die Konzentration der Mehrzahl von Körnern (64b, 82m) in jeder der Schichten so bestimmt ist, um mit einer Zunahme des Abstands von dem fluoreszierenden Teil (3) graduell zuzunehmen, wenn die erste Abflachungsschicht (6, 6g) als ein Ganzes betrachtet wird.

14. Farbumwandlungselement (1) nach einem der Ansprüche 1 bis 13, wobei
    mindestens eine der ersten Abflachungsschicht (6, 6g) und der zweiten Abflachungsschicht (7) eine sichtbare Lichttransmission von 90 % oder mehr aufweist.

15. Farbumwandlungselement (1) nach einem der Ansprüche 1 bis 14, wobei die zweite Abflachungsschicht (7) einen kleineren Brechungsindex als der fluoreszierende Teil (3) aufweist.

16. Farbumwandlungselement (1) nach einem der Ansprüche 1 bis 15, wobei
    mindestens eine der ersten Abflachungsschicht (6) und der zweiten Abflachungsschicht (7) eine Dicke von 1,0 $\mu$m oder mehr aufweist.

17. Farbumwandlungselement (1) nach Anspruch 16, wobei
    ein Abstand in Bezug auf eine Dicke zwischen dem Scheitelpunkt einer Erhebung und dem Scheitelpunkt einer Vertiefung jeder der ersten Hauptoberfläche (31) und der zweiten Hauptoberfläche (32) des fluoreszierenden Teils (3) 1,0 $\mu$m oder weniger beträgt.

18. Farbumwandlungselement (1) nach einem der Ansprüche 1 bis 17, wobei
    mindestens eine der ersten Abflachungsschicht (6, 6b, 6m, 6f, 6g) und der zweiten Abflachungsschicht (7) aus $SiO_2$ gebildet ist.

19. Farbumwandlungselement (1) nach einem der Ansprüche 1 bis 18, wobei
    die Hauptoberfläche der zweiten Abflachungsschicht (7), die der reflektierenden Schicht (4) zugewandt ist, eine Oberflächenrauhigkeit Ra von 20 nm oder weniger aufweist.

## Revendications

1. Élément de conversion de couleur (1), comprenant :

   un substrat (2) ;

   une partie fluorescente (3) qui est agencée au-dessus du substrat (2), reçoit de la lumière laser (L) d'un extérieur et émet de la lumière d'une couleur différente d'une couleur de la lumière laser (L) ;

   une première couche d'aplatissement (6) qui est superposée sur une première surface principale (31) de la partie fluorescente (3) à l'opposé du substrat (2) ;

   une seconde couche d'aplatissement (7) qui est superposée sur une seconde surface principale (32) de la partie fluorescente (3) tournée vers le substrat (2) ;

   une couche réfléchissante (4) qui est superposée sur une surface principale de la seconde couche d'aplatissement (7) tournée vers le substrat (2) et formée d'un film multicouche diélectrique ; et

   une partie de liaison (5) qui se situe entre la couche réfléchissante (4) et le substrat (2), et relie ensemble la couche réfléchissante (4) et le substrat (2),

   dans lequel

   la rugosité de surface Ra d'une surface principale de la première couche d'aplatissement (6) à l'opposé de la partie fluorescente (3) est inférieure à la rugosité de surface Ra de la première surface principale (31) de la partie fluorescente (3), la rugosité de surface Ra de la surface principale de la seconde couche d'aplatissement (7) sur laquelle la couche réfléchissante (4) est superposée est inférieure à la rugosité de surface Ra de la seconde surface principale (32) de la partie fluorescente (3),

   la couche réfléchissante (4) réfléchit de la lumière qui est de la lumière laser (L) et de la lumière émise depuis la partie fluorescente (3), transmise à travers la seconde couche d'aplatissement (7), et

   à une position chevauchant, dans une vue en plan, au moins une partie d'une région d'irradiation (R) de la partie fluorescente (3) irradiée par la lumière laser (L), la partie de liaison (5) inclut une couche d'air (53) qui expose la couche réfléchissante (4).

2. Élément de conversion de couleur (1) selon la revendication 1, dans lequel
   une couche de suppression de réflexion (8) est superposée sur la surface principale de la première couche d'aplatissement (6) à l'opposé de la partie fluorescente (3).

3. Élément de conversion de couleur (1) selon la revendication 2, dans lequel
   la couche de suppression de réflexion (8, 8j, 8k) inclut : une couche de base (81j, 81k) qui est transmissive à la lumière ; et une pluralité de bulles d'air (82j, 82k) qui sont dispersées dans la couche de base (81j, 81k).

4. Élément de conversion de couleur (1) selon la revendication 3, dans lequel
   la pluralité de bulles d'air (82j, 82k) correspondent à un espace défini par une pluralité de fins granules (83k) agrégés.

5. Élément de conversion de couleur (1) selon la revendication 3 ou 4, dans lequel
   un diamètre de la pluralité de bulles d'air (82j, 82k) est inférieur à une longueur d'onde de la lumière laser (L).

6. Élément de conversion de couleur (1) selon la revendication 1, dans lequel

   la première couche d'aplatissement (6, 6b, 6m) inclut : une base (65b, 65m) qui est transmissive à la lumière ; et une pluralité de granules (64b, 82m) qui sont dispersés dans la base, et
   la pluralité de granules (64b, 82m) ont un indice de réfraction inférieur à la base (65b, 65m).

7. Élément de conversion de couleur (1) selon la revendication 6, dans lequel
   la pluralité de granules (64b, 82m) correspondent à des bulles d'air (82m).

8. Élément de conversion de couleur (1) selon la revendication 7, dans lequel
   les bulles d'air (82m) correspondent à un espace formé d'une pluralité de fins granules agrégés.

9. Élément de conversion de couleur (1) selon la revendication 6, dans lequel
   la pluralité de granules (64b, 82m) correspondent à des granules creux (64b).

10. Élément de conversion de couleur (1) selon l'une quelconque des revendications 6 à 9, dans lequel

    la première couche d'aplatissement (6, 6f) inclut : une première couche (610f) qui est superposée sur la première surface principale (31) de la partie fluorescente (3) ; et une seconde couche (620f) qui est superposée sur une surface de la première couche à l'opposé de la partie fluorescente (3),
    la première couche (610f) n'inclut pas la pluralité de granules (64b, 82m), et
    la pluralité de granules (64b, 82m) sont dispersés dans la seconde couche (620f).

11. Élément de conversion de couleur (1) selon l'une quelconque des revendications 6 à 10, dans lequel un diamètre de la pluralité de granules (64b, 82m) est inférieur à une longueur d'onde de la lumière laser (L).

12. Élément de conversion de couleur (1) selon l'une quelconque des revendications 6 à 11, dans lequel une concentration de la pluralité de granules (64b, 82m) augmente progressivement avec une augmentation d'une distance depuis la partie fluorescente (3) dans la première couche d'aplatissement (6).

13. Élément de conversion de couleur (1) selon la revendication 12, dans lequel

la première couche d'aplatissement (6, 6g) est formée d'une pluralité de couches (610f, 620g, 630g, 640g), et
la concentration de la pluralité de granules (64b, 82m) dans chacune des couches est déterminée de manière à augmenter progressivement avec une augmentation de la distance depuis la partie fluorescente (3) lorsque la première couche d'aplatissement (6, 6g) est visualisée dans son ensemble.

14. Élément de conversion de couleur (1) selon l'une quelconque des revendications 1 à 13, dans lequel au moins une de la première couche d'aplatissement (6, 6g) et la seconde couche d'aplatissement (7) a une transmittance à la lumière visible de 90 % ou plus.

15. Élément de conversion de couleur (1) selon l'une quelconque des revendications 1 à 14, dans lequel la seconde couche d'aplatissement (7) a un indice de réfraction inférieur à la partie fluorescente (3).

16. Élément de conversion de couleur (1) selon l'une quelconque des revendications 1 à 15, dans lequel au moins une de la première couche d'aplatissement (6) et la seconde couche d'aplatissement (7) a une épaisseur de 1,0 $\mu$m ou plus.

17. Élément de conversion de couleur (1) selon la revendication 16, dans lequel
un intervalle dans le sens de l'épaisseur entre le sommet d'une saillie et le sommet d'un retrait de chacune de la première surface principale (31) et la seconde surface principale (32) de la partie fluorescente (3) est de 1,0 $\mu$m ou moins.

18. Élément de conversion de couleur (1) selon l'une quelconque des revendications 1 à 17, dans lequel

au moins une de la première couche d'aplatissement (6, 6b, 6m, 6f, 6g) et la seconde couche d'aplatissement (7) est formée de $SiO_2$.

19. Élément de conversion de couleur (1) selon l'une quelconque des revendications 1 à 18, dans lequel la surface principale de la seconde couche d'aplatissement (7) tournée vers la couche réfléchissante (4) a une rugosité de surface Ra de 20 nm ou moins.

# FIG. 1

# FIG. 2

# FIG. 3

# FIG. 4

FIG. 5

EP 3 916 439 B1

FIG. 6

23

# FIG. 7

FIG. 8

FIG. 9

# FIG. 10

FIG. 11

FIG. 12

FIG. 13

FIG. 14

# FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016099566 A

- CN 106468427 A